(19) Europäisches Patentamt European Patent Office Office européen des brevets

(11) **EP 3 471 169 A1**

(12) **EUROPEAN PATENT APPLICATION**
published in accordance with Art. 153(4) EPC

(43) Date of publication:
**17.04.2019 Bulletin 2019/16**

(51) Int Cl.:
**H01M 2/14** *(2006.01)*  **H01M 10/058** *(2010.01)*

(21) Application number: **16904632.3**

(22) Date of filing: **08.06.2016**

(86) International application number:
**PCT/JP2016/067139**

(87) International publication number:
**WO 2017/212597 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nissan Motor Co., Ltd.**
**Yokohama-shi, Kanagawa 221-0023 (JP)**

(72) Inventors:
• **HIRAI, Tamaki**
**Atsugi-shi**
**Kanagawa 243-0123 (JP)**

• **FUJII, Takayuki**
**Atsugi-shi**
**Kanagawa 243-0123 (JP)**
• **ISHIMOTO, Seiji**
**Atsugi-shi**
**Kanagawa 243-0123 (JP)**
• **KAWAMURA, Fumihiro**
**Atsugi-shi**
**Kanagawa 243-0123 (JP)**

(74) Representative: **Grünecker Patent- und Rechtsanwälte PartG mbB Leopoldstraße 4 80802 München (DE)**

(54) **NONAQUEOUS-ELECTROLYTE SECONDARY CELL**

(57)    To provide a means capable of suppressing the occurrence of internal short circuit in a power generating element when a battery is destroyed from the outside in a nonaqueous electrolyte secondary battery having a capacity and a size corresponding to a high energy density.

Provided is a nonaqueous electrolyte secondary battery which includes a power generating element including a positive electrode fabricated by forming a positive electrode active material layer containing a positive electrode active material on a surface of a positive electrode current collector, a negative electrode fabricated by forming a negative electrode active material layer containing a negative electrode active material on a surface of a negative electrode current collector, and a separator including a resin film and in which a volumetric energy density of the nonaqueous electrolyte secondary battery is 350 Wh/L or more and there is at least one direction having a tensile yield strength of 14 MPa or less at normal temperature, a tensile elongation at break of 100% or more at normal temperature, and a thermal shrinkage of 10% or less at the time of heating at 150°C for 1 hour in a plane direction of the separator.

FIG.1

## Description

### TECHNICAL FIELD

The present invention relates to a nonaqueous electrolyte secondary battery.

### BACKGROUND ART

Currently, nonaqueous electrolyte secondary batteries including lithium ion secondary batteries, which are utilized in mobile devices such as mobile phones, have been commercialized. Nonaqueous electrolyte secondary batteries generally have a configuration in which a positive electrode in which a positive electrode active material and the like are coated on a current collector and a negative electrode in which a negative electrode active material and the like are coated on a current collector are connected to each other via an electrolyte layer in which a nonaqueous electrolytic solution or a nonaqueous electrolyte gel is held in a separator. Moreover, the charge and discharge reaction of the battery takes place as ions such as lithium ions are occluded in and released from the electrode active material.

In recent years, however, it has been demanded to diminish the amount of carbon dioxide in order to cope with global warming. Hence, nonaqueous electrolyte secondary batteries with less environmental burden are being utilized not only in mobile devices and the like but also in power supply devices of electric-powered vehicles such as hybrid electric vehicles (HEV), electric vehicles (EV), and fuel cell vehicles.

Nonaqueous electrolyte secondary batteries as described above are desired to have a still higher capacity. It is more important to secure safety since the quantity of chemical energy to be stored in the battery increases along with this.

For this reason, an external destruction test is generally performed to evaluate the safety in a case in which the battery is destroyed from the outside. As one of external destruction tests, for example, there is a nail penetration test. The nail penetration test is a test to observe phenomena such as temperature rise when a conductive nail (hereinafter, also referred to as a "conductor") is pierced in the thickness direction of a flat plate-like exterior packaging body so as to penetrate the battery and an internal short circuit is thus caused in a power generating element.

A large current flows in the power generating element usually when an internal short circuit is caused in the power generating element as a conductor penetrates the battery. At this time, Joule heat is generated and temperature rise occurs. In addition, instantaneous sparking occurs at the place at which the internal short circuit is caused and thermal decomposition and the like of the positive electrode active material take place by this generation of heat in some cases.

Hitherto, as a technique to control a separator to be used in a power generating element of a nonaqueous electrolyte secondary battery, for example, Patent Literature 1 proposes a technique in which a separator is formed by laminating two or more microporous porous membranes using a mixture containing polyethylene having a viscosity average molecular weight of 1,000,000 or more at from 10% to 60% by weight, polyethylene having a viscosity average molecular weight of from 100,000 to less than 1,000,000 at from 10% to 60% by weight and ethylene-propylene rubber at from 10% to 40% by weight as a material.

In addition, Patent Literature 2 proposes a technique in which a heat resistant microporous film which has a porous substrate film having a micropore portion and a heat resistant layer which is integrally layered on at least one surface of the porous substrate film and has a hole portion and in which the thickness of the heat resistant layer is 1 $\mu$m or less and the Gurley value is from 50 to 400 sec/100 mL as well as the surface opening ratio [100 $\times$ (surface opening ratio of micropore portion of porous substrate film - surface opening ratio of hole portion of heat resistant microporous film) /surface opening ratio of micropore portion of porous substrate film] is 5% or less is used as a separator. Here, in Patent Literature 2, it is described that the tensile yield strength of the heat resistant microporous film at normal temperature is preferably 34 Pa (it is considered that the unit is an error of "MPa") or more and the tensile elongation at break at normal temperature is preferably 50% or more and more preferably from 55% to 100% from the viewpoint of being able to suppress breakage of the film in the battery fabricating process.

Citation List

Patent Literatures

Patent Literature 1: JP 8-138644 A
Patent Literature 2: JP 2015-022893 A

## SUMMARY OF INVENTION

Nonaqueous electrolyte secondary batteries to be mounted on electric-powered vehicles are demanded to have a still higher energy density. Here, according to the investigations by the inventors of the present invention, it has been found out that it is impossible to sufficiently suppress the occurrence of internal short circuit in the power generating element when the battery is destroyed from the outside in some cases in a case in which a conventionally known separator is simply applied to a nonaqueous electrolyte secondary battery having a capacity and a size corresponding to a high energy density.

Accordingly, an object of the present invention is to provide a means capable of suppressing the occurrence of internal short circuit in the power generating element when the battery is destroyed from the outside in a nonaqueous electrolyte secondary battery having a capacity and a size corresponding to a high energy density.

The inventors of the present invention have carried out intensive investigations to solve the above problems. As a result, it has been found out that it is effective to set the thermal shrinkage at the time of heating at 150°C for 1 hour to a predetermined value or less as well as to set the tensile yield strength at normal temperature to a predetermined value or less and the tensile elongation at break at normal temperature to a predetermined value or more in a nonaqueous electrolyte secondary battery having a capacity and a size corresponding to a high energy density on contrary to the configuration recommended in Patent Literature 2 in order to solve the above problems. Moreover, it has been found out that the above problems can be solved by configuring a nonaqueous electrolyte secondary battery using a separator having at least one direction satisfying such conditions in the plane direction, whereby the present invention has been completed.

That is, according to an aspect of the present invention, there is provided a nonaqueous electrolyte secondary battery including a power generating element including: a positive electrode fabricated by forming a positive electrode active material layer containing a positive electrode active material on a surface of a positive electrode current collector, a negative electrode fabricated by forming a negative electrode active material layer containing a negative electrode active material on a surface of a negative electrode current collector, and a separator including a resin film, wherein a volumetric energy density of the nonaqueous electrolyte secondary battery is 350 Wh/L or more, and there is at least one direction having a tensile yield strength of 14 MPa or less at normal temperature, a tensile elongation at break of 100% or more at normal temperature, and a thermal shrinkage of 10% or less at the time of heating at 150°C for 1 hour in a plane direction of the separator.

## BRIEF DESCRIPTION OF DRAWINGS

Fig. 1 is a schematic cross-sectional view illustrating a basic configuration of a nonaqueous electrolyte lithium ion secondary battery which is a flat type (stacked type) but not a bipolar type and is an embodiment of a nonaqueous electrolyte secondary battery.

Fig. 2 is an explanatory view for explaining a method of selecting the measurement regions at nine places in a plane when calculating the variation in porosity in a separator.

Fig. 3 is a perspective view illustrating the appearance of a flat lithium ion secondary battery, which is a representative embodiment of a nonaqueous electrolyte secondary battery.

## DESCRIPTION OF EMBODIMENTS

An aspect of the present invention is a nonaqueous electrolyte secondary battery which includes a power generating element including a positive electrode fabricated by forming a positive electrode active material layer containing a positive electrode active material on a surface of a positive electrode current collector, a negative electrode fabricated by forming a negative electrode active material layer containing a negative electrode active material on a surface of a negative electrode current collector, and a separator including a resin film and in which a volumetric energy density of the nonaqueous electrolyte secondary battery is 350 Wh/L or more and there is at least one direction having a tensile yield strength of 14 MPa or less at normal temperature, a tensile elongation at break of 100% or more at normal temperature, and a thermal shrinkage of 10% or less at the time of heating at 150°C for 1 hour in a plane direction of the separator.

The distance that can be travelled by an electric-powered vehicle on a single charge (cruising distance) is shorter as compared with that by a gasoline-powered vehicle so far, and it is desired to increase the cruising distance of electric-powered vehicles in order to spread the electric-powered vehicles. It is required to increase the energy density of the battery to be mounted on electric-powered vehicles in order to achieve a long cruising distance . Here, as a means for achieving a high energy density of battery, there are means that, for example, the area (increasing in size) of the battery is increased, the capacity of the active material to be contained in the active material layer is increased, and the active material density in the active material layer is increased.

As a nonaqueous electrolyte secondary battery having a capacity and a size corresponding to a high energy density, the inventors of the present invention have carried out investigations on a nonaqueous electrolyte secondary battery having a volumetric energy density of 350 Wh/L or more. In the process of the investigation, it has been found out that it is impossible to sufficiently suppress the occurrence of internal short circuit in the power generating element when the battery is destroyed from the outside in some cases in a case in which a conventionally known separator is simply applied to such a nonaqueous electrolyte secondary battery having a high energy density. In contrast, it has been found out that the above problems can be solved by using a separator in which there is at least one direction having a tensile yield strength (normal temperature) of a predetermined value (14 MPa) or less, a tensile elongation at break (normal temperature) of a predetermined value (100%) or more, and a thermal shrinkage (at 150°C for 1 hour) of a predetermined value (10%) or less in the plane direction, whereby the present invention has been completed.

The detailed mechanism by which the above effect is exerted is not clear, but it is presumed as follows. That is, according to the nonaqueous electrolyte secondary battery of the present invention, when the battery is destroyed from the outside by intrusion of a conductor or the like, the separator can easily follow the conductor since the tensile yield strength of the separator is small and rupture of the separator is prevented at the initial stage of intrusion. In addition, the separator can sufficiently elongate since the tensile elongation at break of the separator is large and rupture of the separator is also prevented at the middle stage to the end stage of the intrusion. Furthermore, expansion of the site at which rupture occurs can be prevented even in a case in which the rupture is caused since the thermal shrinkage of the separator is small. It is considered that it is possible to sufficiently suppress the occurrence of internal short circuit in the power generating element when the battery is destroyed from the outside by intrusion of a conductor or the like in a nonaqueous electrolyte secondary battery having a capacity and a size corresponding to a high energy density according to the nonaqueous electrolyte secondary battery of the present invention as a result of the combined action of these. Incidentally, the technical scope of the present invention is not limited to the mechanism at all.

Hereinafter, embodiments of the present invention will be described with reference to the accompanying drawings. Incidentally, in the description of the drawings, the same elements are denoted by the same reference numerals and duplicate descriptions are omitted. In addition, the dimensional ratios in the drawings are exaggerated for convenience of explanation and may differ from the actual ratios.

[Nonaqueous electrolyte secondary battery]

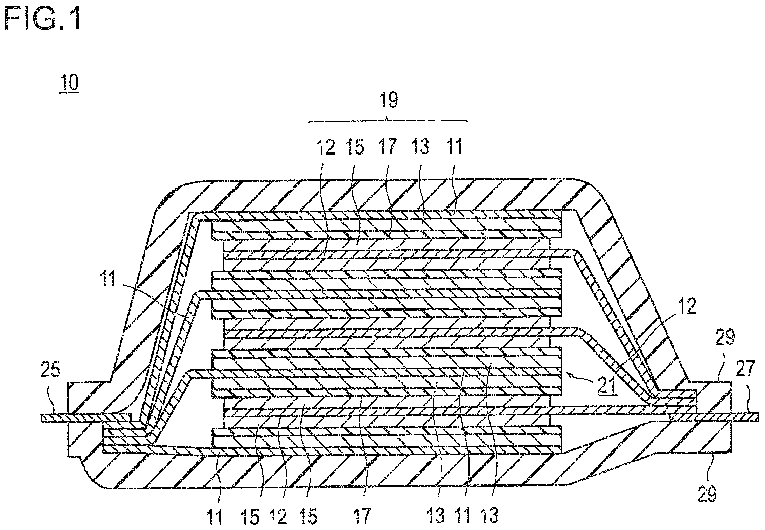

Fig. 1 is a schematic cross-sectional view schematically illustrating the outline of a stacked type battery, which is an embodiment of the battery of the present invention. Incidentally, in the present specification, a lithium ion secondary battery, which is a flat type (stacked type) but not a bipolar type and is illustrated in Fig. 1, will be described in detail as an example, but the technical scope of the present invention is not limited to only such a form.

First, the overall structure of the nonaqueous electrolyte secondary battery of the present invention will be described with reference to the drawings.

[Overall structure of battery]

Fig. 1 is a schematic cross-sectional view schematically illustrating the basic configuration of a nonaqueous electrolyte lithium ion secondary battery (hereinafter also simply referred to as a "stacked type battery") which is a flat type (stacked type) but not a bipolar type. As illustrated in Fig. 1, a stacked type battery 10 of the present embodiment has a structure in which a substantially rectangular power generating element 21 in which a charge and discharge reaction actually takes place is sealed inside a battery exterior material 29 which is an exterior packaging body. Here, the power generating element 21 has a structure in which a positive electrode, a separator 17, and a negative electrode are layered. Incidentally, the separator 17 is composed of a laminate of a three-layer laminated resin film (not illustrated) having a configuration of porous polypropylene (PP) film/porous polyethylene (PE) film/porous polypropylene (PP) film and a ceramic layer (heat resistant insulating layer) (not illustrated) in which inorganic particles such as alumina are dispersed in a binder composed of a resin and retains a nonaqueous electrolyte (for example, a liquid electrolyte). The positive electrode has a structure in which a positive electrode active material layer 15 is disposed on both sides of a positive electrode current collector 12. The negative electrode has a structure in which a negative electrode active material layer 13 is disposed on both sides of a negative electrode current collector 11. Specifically, the negative electrode, an electrolyte layer and the positive electrode are layered in this order so that one positive electrode active material layer 15 and the negative electrode active material layer 13 adjacent to this face each other via the separator 17. By this, the adjacent positive electrode, electrolyte layer, and negative electrode constitute one single cell layer 19. Consequently, it can also be said that the stacked type battery 10 illustrated in Fig. 1 has a configuration in which a plurality of single cell layers 19 are electrically connected in parallel by being stacked one on another.

Incidentally, the negative electrode active material layer 13 is disposed only on one side of each of the outermost layer negative electrode current collectors positioned at both outermost layers of the power generating element 21, but the active material layer may be provided on both sides thereof . In other words, a current collector having an active material layer on both sides may be used as it is as the current collector of the outermost layer instead of using a current collector dedicated to the outermost layer in which the active material layer is provided only on one side. In addition, the single-sided positive electrode active material layer of the outermost layer positive electrode current collector may be disposed so that the outermost layer positive electrode current collector may be positioned on both outermost layers of the power generating element 21 by reversing the disposition of the positive electrode and the negative electrode from that in Fig. 1.

The positive electrode current collector 12 and the negative electrode current collector 11 have a structure in which a positive electrode current collecting plate (tab) 27 and a negative electrode current collecting plate (tab) 25, which are electrically conducted with the respective electrodes (positive electrode and negative electrode), are respectively attached to the positive electrode current collector 12 and the negative electrode current collector 11 and led to the outside of the battery exterior material 29 so as to be sandwiched between the end portions of the battery exterior material 29. The positive electrode current collecting plate 27 and the negative electrode current collecting plate 25 may be respectively attached to the positive electrode current collector 12 and the negative electrode current collector 11 of the respective electrodes via a positive electrode lead and a negative electrode lead (not illustrated) by ultrasonic welding, resistance welding or the like if necessary.

Incidentally, a stacked type battery which is a flat type (stacked type) but not a bipolar type is illustrated in Fig. 1, but the battery may be a bipolar battery including a bipolar electrode having a positive electrode active material layer electrically coupled with one side of a current collector and a negative electrode active material layer electrically coupled with the opposite side of the current collector. In this case, one current collector serves as a positive electrode current collector and a negative electrode current collector at the same time.

Hereinafter, the respective members constituting the nonaqueous electrolyte lithium ion secondary battery which is an embodiment of the present invention will be described.

[Positive electrode]

The positive electrode has a positive electrode current collector and a positive electrode active material layer, which contains a positive electrode active material and is formed on the surface of the positive electrode current collector.

(Positive electrode current collector)

The material constituting the positive electrode current collector is not particularly limited, but a metal is suitably used. Specifically, examples of the metal may include aluminum, nickel, iron, stainless steel, titanium, copper, and other alloys. In addition to these, a clad material of nickel and aluminum, a clad material of copper and aluminum, a plated material of a combination of these metals, and the like can be preferably used. In addition, the material may be a foil in which aluminum is covered on a metal surface. Among these, aluminum, stainless steel and copper are preferable from the viewpoint of electron conductivity and battery operating potential.

The size of the current collector is determined depending on the intended use of the battery. For example, a current collector having a large area is used when being used in a large-sized battery required to have a high energy density. The thickness of the current collector is also not particularly limited. The thickness of the current collector is usually about from 1 to 100 $\mu$m.

In addition, the same materials as those described above can be used in the case of using a negative electrode current collector in the negative electrode to be described later as well.

(Positive electrode active material layer)

The positive electrode active material layer 15 contains a positive electrode active material and further other additives such as a conductive auxiliary, a binder, and an electrolyte salt (lithium salt) and an ion conductive polymer as an electrolyte.

(Positive electrode active material)

Examples of the positive electrode active material may include lithium-transition metal composite oxides such as $LiMn_2O_4$, $LiCoO_2$, $LiNiO_2$, $Li(Ni-Mn-Co)O_2$ and those in which a part of these transition metals are substituted with other elements, a lithium-transition metal phosphate compound and a lithium-transition metal sulfate compound. In some cases, two or more kinds of positive electrode active materials may be used concurrently. Preferably, a lithium-transition metal composite oxide is used as a positive electrode active material from the viewpoint of capacity and output characteristics. In some cases, two or more kinds of positive electrode active materials may be used concurrently.

More preferably, Li(Ni-Mn-Co)$O_2$ and those in which a part of these transition metals are substituted with other elements (hereinafter also simply referred to as "NMC composite oxides") are used. The NMC composite oxide has a layered crystal structure in which a lithium atom layer and a transition metal (Mn, Ni and Co are orderly disposed) atom layer are alternately layered via an oxygen atom layer and contains one Li atom per one transition metal atom, thus the amount of Li that can be taken out is two times that of spinel type lithium manganese oxide, that is, the supply capability is two times and the NMC composite oxide can have a high capacity.

As described above, the NMC composite oxide also includes a composite oxide in which a part of transition metal elements is substituted with other metal elements. Examples of other elements in that case may include Ti, Zr, Nb, W, P, Al, Mg, V, Ca, Sr, Cr, Fe, B, Ga, In, Si, Mo, Y, Sn, V, Cu, Ag, and Zn, and Ti, Zr, Nb, W, P, Al, Mg, V, Ca, Sr, and Cr are preferable, Ti, Zr, P, Al, Mg, and Cr are more preferable, and Ti, Zr, Al, Mg and Cr are still more preferable from the viewpoint of improving the cycle characteristics.

The NMC composite oxide preferably has a composition to be represented by a general formula (1) : $Li_aNi_bMn_cCo_dM_xO_2$ (where a, b, c, d and x satisfy $0.9 \leq a \leq 1.2$, $0 < b < 1$, $0 < c \leq 0.5$, $0 < d \leq 0.5$, $0 \leq x \leq 0.3$, and b + c + d = 1. M is at least one kind of element selected from Ti, Zr, Nb, W, P, Al, Mg, V, Ca, Sr and Cr) since the theoretical discharge capacity is high. Here, a represents the atomic ratio of Li, b represents the atomic ratio of Ni, c represents the atomic ratio of Mn, d represents the atomic ratio of Co, and x represents the atomic ratio of M. It is preferable that $0.4 \leq b \leq 0.6$ in the general formula (1) from the viewpoint of cycle characteristics. Incidentally, the composition of the respective elements can be measured by, for example, inductively coupled plasma (ICP) emission spectroscopy.

It is generally known that nickel (Ni), cobalt (Co) and manganese (Mn) contribute to capacity and output characteristics from the viewpoint of improving the purity of a material and the electron conductivity. Ti and the like partially substitute the transition metals in the crystal lattice. From the viewpoint of cycle characteristics, a part of the transition elements may be substituted with other metal elements. In this case, it is preferable that $0 < x \leq 0.3$ in the general formula (1). It is considered that the crystal structure is stabilized as at least one kind selected from the group consisting of Ti, Zr, Nb, W, P, Al, Mg, V, Ca, Sr and Cr forms a solid solution and, as a result, a decrease in the capacity of the battery can be prevented even when charge and discharge are repeatedly performed and excellent cycle characteristics can be realized.

As a more preferred embodiment, it is preferable that b, c and d satisfy $0.44 \leq b \leq 0.51$, $0.27 \leq c \leq 0.31$, $0.19 \leq d \leq 0.26$ in the general formula (1) from the viewpoint of excellent balance between capacity and durability.

The NMC composite oxide can be prepared by selecting various known methods such as a coprecipitation method and a spray drying method. It is preferable to use a coprecipitation method since it is easy to prepare the composite oxide. Specifically, nickel-cobalt-manganese complex hydroxide is produced by a coprecipitation method, for example, as the method described in JP 2011-105588 A. Thereafter, the nickel-cobalt-manganese complex hydroxide and a lithium compound are mixed together and calcined, whereby the NMC composite oxide can be obtained.

Incidentally, it goes without saying that positive electrode active materials other than those described above may be used.

The average particle diameter of the positive electrode active material to be contained in the positive electrode active material layer is not particularly limited, but it is preferably from 1 to 100 $\mu$m and more preferably from 1 to 25 $\mu$m from the viewpoint of high output.

The content of the positive electrode active material in the positive electrode active material layer is preferably from 80% to 99.5% by weight and more preferably from 85% to 99.5% by weight.

(Binder)

The binder to be used in the positive electrode active material layer is not particularly limited, but examples thereof may include the following materials. Thermoplastic polymers such as polyethylene, polypropylene, polyethylene terephthalate (PET), polyether nitrile, polyacrylonitrile, polyimide, polyamide, cellulose, carboxymethyl cellulose (CMC) and any salt thereof, an ethylene-vinyl acetate copolymer, polyvinyl chloride, styrene-butadiene rubber (SBR), isoprene rubber, butadiene rubber, ethylene-propylene rubber, an ethylene-propylene-diene copolymer, a styrene-butadiene-styrene block copolymer and any hydrogenated product thereof, and a styrene-isoprene-styrene block copolymer and any hydrogenated product thereof; fluorocarbon resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorocarbon rubbers such as vinylidene fluoride-hexafluoropropylene-based fluorocarbon rubber (VDF-HFP-based fluorocarbon rubber), vinylidene fluoride-hexafluoropropylene-tetrafluoroethylene-based fluorocarbon rubber (VDF-HFP-TFE-based fluorocarbon rubber), vinylidene fluoride-pentafluoropropylene-based fluorocarbon rubber (VDF-PFP-based fluorocarbon rubber), vinylidene fluoride-pentafluoropropylene-tetrafluoroethylene-based fluorocarbon rubber (VDF-PFP-TFE-based fluorocarbon rubber), vinylidene fluoride-perfluoromethyl vinyl ether-tetrafluoroethylene-based fluorocarbon rubber (VDF-PFMVE-TFE-based fluorocarbon rubber), and vinylidene fluoride-chlorotrifluoroethylene-based fluorocarbon rubber (VDF-CTFE-based fluorocarbon rubber); and epoxy resins. These binders may be used singly or two or more kinds thereof may be used concurrently.

The amount of the binder to be contained in the positive electrode active material layer is not particularly limited as long as it is an amount in which the active material can be bound, but it is preferably from 0.5% to 15% by weight and more preferably from 1% to 10% by weight with respect to the active material layer.

The positive electrode active material layer further contains other additives such as a conductive auxiliary, an electrolyte (a polymer matrix, an ion conductive polymer, an electrolytic solution, or the like), and a lithium salt for enhancing the ion conductivity if necessary.

The conductive auxiliary refers to an additive to be compounded for improving the electrical conductivity of the positive electrode active material layer or the negative electrode active material layer. Examples of the conductive auxiliary may include carbon materials such as carbon black such as Ketjen black and acetylene black, graphite, and a carbon fiber. The electronic network inside the active material layer is effectively formed when the active material layer contains a conductive auxiliary, and this can contribute to improvement in output characteristics of the battery.

Examples of the electrolyte salt (lithium salt) may include $Li(C_2F_5SO_2)_2N$, $LiPF_6$, $LiBF_4$, $LiClO_4$, $LiAsF_6$, and $LiCF_3SO_3$.

Examples of the ion conductive polymer may include polyethylene oxide (PEO)-based polymers and polypropylene oxide (PPO)-based polymers.

The compounding ratio of the components to be contained in the positive electrode active material layer and the negative electrode active material layer to be described below is not particularly limited. The compounding ratio can be adjusted by appropriately referring to known knowledge on the lithium ion secondary batteries. The thickness of the respective active material layers is also not particularly limited, and conventionally known knowledge on the batteries can be appropriately referred to. As an example, the thickness of the respective active material layers is about from 2 to 100 $\mu$m.

[Negative electrode]

The negative electrode has a negative electrode current collector and a negative electrode active material layer formed on the surface of the negative electrode current collector.

[Negative electrode active material layer]

The negative electrode active material layer contains a negative electrode active material and further other additives such as a conductive auxiliary, a binder, an electrolyte (a polymer matrix, an ion conductive polymer, an electrolytic solution, or the like), and a lithium salt for enhancing the ion conductivity if necessary. The other additives such as a conductive auxiliary, a binder, an electrolyte (a polymer matrix, an ion conductive polymer, an electrolytic solution, or the like), and a lithium salt for enhancing the ion conductivity are the same as those described in the section of the positive electrode active material layer above.

Examples of the negative electrode active material may include graphite (graphite) such as artificial graphite, coated natural graphite and natural graphite, carbon materials such as soft carbon and hard carbon, a lithium-transition metal composite oxide (for example, $Li_4Ti_5O_{12}$), a metal material, and a lithium alloy-based negative electrode material. In some cases, two or more kinds of negative electrode active materials may be used concurrently. Preferably, a carbon material or a lithium-transition metal composite oxide is used as the negative electrode active material from the viewpoint of capacity and output characteristics. Incidentally, it goes without saying that negative electrode active materials other than those described above may be used.

The average particle diameter of the negative electrode active material is not particularly limited, but it is preferably from 1 to 100 $\mu$m and more preferably from 1 to 30 $\mu$m from the viewpoint of high output.

It is preferable that the negative electrode active material layer contains at least a water-based binder. A water-based binder exhibits high binding strength. In addition, there is an advantage that it is possible to greatly diminish the capital investment in the manufacturing line and to achieve a decrease in the environmental burden since water vapor is generated at the time of drying as well as it is easy to procure water as a raw material.

The water-based binder refers to a binder in which water is used as a solvent or dispersion medium, and specifically it includes a thermoplastic resin, a polymer exhibiting rubber elasticity, a water-soluble polymer and the like or any mixture thereof. Here, a binder containing water as a dispersion medium includes all those expressed as latex or emulsion and refers to a polymer, which is emulsified with or suspended in water, and examples thereof may include polymer latexes emulsified and polymerized in a system that self-emulsifies.

Specific examples of the water-based binder may include styrene-based polymers (styrene-butadiene rubber, a styrene-vinyl acetate copolymer, a styrene-acrylic copolymer, and the like), acrylonitrile-butadiene rubber, methyl methacrylate-butadiene rubber, (meth)acrylic polymers (polyethyl acrylate, polyethyl methacrylate, polypropyl acrylate, polymethyl methacrylate (methyl methacrylate rubber), polypropyl methacrylate, polyisopropyl acrylate, polyisopropyl methacrylate, polybutyl acrylate, polybutyl methacrylate, polyhexyl acrylate, polyhexyl methacrylate, polyethylhexyl acrylate, polyethylhexyl methacrylate, polylauryl acrylate, polylauryl methacrylate, and the like), polytetrafluoroethylene, polyethylene, polypropylene, an ethylene-propylene copolymer, polybutadiene, butyl rubber, fluorocarbon rubber, polyethylene oxide, polyepichlorohydrin, polyphosphazene, polyacrylonitrile, polystyrene, an ethylene-propylene-diene copolymer, polyvinyl pyridine, chlorosulfonated polyethylene, a polyester resin, a phenol resin, and an epoxy resin: and water-soluble polymers such as polyvinyl alcohol (the average degree of polymerization is suitably from 200 to 4000 and more suitably from 1000 to 3000, the degree of saponification is suitably 80% by mole or more and more suitably 90% by mole or more) and any modified product thereof (a product in which from 1% to 80% by mole of the vinyl acetate units of a copolymer having a molar ratio of ethylene/vinyl acetate = 2/98 to 30/70 are saponified, a product in which from 1% to 50% mole of polyvinyl alcohol is partially acetalized, and the like), starch and any modified product thereof (oxidized starch, phosphorylated starch, cationized starch and the like), cellulose derivatives (carboxymethyl cellulose, methyl cellulose, hydroxypropyl cellulose, hydroxyethyl cellulose, and any salts thereof, and the like), polyvinyl pyrrolidone, polyacrylic acid (salt), polyethylene glycol, copolymers of (meth)acrylamide and/or (meth)acrylic acid salts [a (meth)acrylamide polymer, a (meth) acrylamide- (meth) acrylic acid salt copolymer, a (meth) acrylic acid alkyl (having from 1 to 4 carbon atoms) ester- (meth) acrylic acid salt copolymer, and the like], a styrene-maleic acid salt copolymer, Mannich modified product of polyacrylamide, formalin condensation resins (a urea-formalin resin, a melamine-formalin resin, and the like), a polyamide polyamine or dialkylamine-epichlorohydrin copolymer, polyethyleneimine, casein, soybean protein, synthetic protein, and galactomannan derivatives. One kind of these water-based binders may be used singly or two or more kinds thereof may be used concurrently.

It is preferable that the water-based binder contains at least one rubber-based binder selected from the group consisting of styrene-butadiene rubber, acrylonitrile-butadiene rubber, methyl methacrylate-butadiene rubber, and methyl methacrylate rubber from the viewpoint of binding property. Furthermore, the water-based binder preferably contains styrene-butadiene rubber since the binding property is favorable.

In the case of using styrene-butadiene rubber as the water-based binder, it is preferable to concurrently use the water-soluble polymer from the viewpoint of improving the coating property. Examples of the water-soluble polymer suitable to be concurrently used with styrene-butadiene rubber may include polyvinyl alcohol and any modified product thereof, starch and any modified product thereof, cellulose derivatives (carboxymethyl cellulose, methyl cellulose, hydroxyethyl cellulose, and any salt thereof, and the like), polyvinyl pyrrolidone, polyacrylic acid (salt), or polyethylene glycol. Among these, it is preferable to combine styrene-butadiene rubber with carboxymethyl cellulose (salt) as the binder. The contained weight ratio of the styrene-butadiene rubber to the water-soluble polymer is not particularly limited, and the ratio of styrene-butadiene rubber : water-soluble polymer is preferably 1 : 0.1 to 10 and more preferably 0.5 to 2.

Among the binders to be used in the negative electrode active material layer, the content of the water-based binder is preferably from 80% to 100% by weight, preferably from 90% to 100% by weight, and preferably 100% by weight.

[Separator (electrolyte layer)]

The separator has a function of holding the electrolyte and thus securing the lithium ion conductivity between the positive electrode and the negative electrode and a function as a partition wall between the positive electrode and the negative electrode.

(Separator)

In the nonaqueous electrolyte secondary battery according to the present aspect, the separator includes a resin film. The resin film constituting the separator is preferably a porous resin film. Examples of a specific form of the porous resin film may include polyolefins such as polyethylene (PE) and polypropylene (PP); a laminate in which a plurality of these are laminated (for example, a laminate having a three-layer structure of PP/PE/PP), and porous resin films formed of hydrocarbon-based resins such as polyimide, aramid, and polyvinyl idene fluoride-hexafluoropropylene (PVdF-HFP), but it is not limited thereto. Among these, a polyolefin film and any laminate thereof are preferable, polypropylene (PP) and/or polyethylene (PE) and any laminate thereof are more preferable, and a laminate having a three-layer structure of PP/PE/PP is particularly preferable. Incidentally, the resin film may be a nonwoven fabric film composed of a fibrous resin.

The thickness of the resin film cannot be unambiguously regulated since it varies depending on the intended use. However, as an example, the thickness of single layer or multilayer is preferably from 6 μm to 30 μm and more preferably from 10 μm to 25 μm in applications such as a secondary battery for driving a motor of an electric vehicle (EV), a hybrid electric vehicle (HEV), a fuel cell vehicle (FCV) and the like. At this time, the thickness of the central layer is preferably from 3 to 9 μm and more preferably from 3 to 6 μm in a case in which the resin film has a three-layer structure. In addition, the thickness of the surface layers (layers other than the central layer) is preferably from 3 to 9 μm and more preferably from 3 to 6 μm. Incidentally, it is preferable that the micropore diameter of the porous resin film is 1 μm or less at maximum (usually, the pore diameter is about several tens of nm) in a case in which the resin film is a porous resin film.

In addition, the nonaqueous electrolyte secondary battery according to the present aspect is characterized in that there is at least one direction (hereinafter also simply referred to as the "particular direction") satisfying the following conditions in the plane direction of the separator.

(1) The tensile yield strength at normal temperature is 14 MPa or less;
(2) the tensile elongation at break at normal temperature is 100% or more; and
(3) the thermal shrinkage at the time of heating at 150°C for 1 hour is 10% or less.

Here, the values to be measured by the methods to be described in the section of Examples later are adopted as the values of (1) tensile yield strength, (2) tensile elongation at break and (3) thermal shrinkage. In addition, in the nonaqueous electrolyte secondary battery according to the present aspect, it is sufficient that there is at least one direction satisfying the above conditions (particular direction) in the plane direction of the separator as described above and the concrete direction of the particular direction is not particularly limited. The particular direction may be, for example, a direction in which the tensile elongation at break is the maximum in the plane direction of the separator, but this is not always the case, and the particular direction may be, for example, a direction in which the tensile yield strength is the minimum. In addition, it is usual that the particular direction is a direction orthogonal to the stretching direction of the uniaxially stretched film, for example, in a case in which the resin film constituting the separator is a uniaxially stretched film.

The "tensile yield strength at normal temperature" in the particular direction is 14 MPa or less, preferably 12 MPa or less, more preferably 9 MPa or less, still more preferably 7 MPa or less, and particularly preferably 5 MPa or less. Incidentally, the lower limit value thereof is not particularly limited, but it is usually 4 MPa or more.

The "tensile elongation at break at normal temperature" in the particular direction is 100% or more, preferably 300% or more, more preferably 450% or more, still more preferably 580% or more, and particularly preferably 920% or more. Incidentally, the upper limit value thereof is not particularly limited, but it is usually 1000% or less.

The "thermal shrinkage at the time of heating at 150°C for 1 hour" in the particular direction is 10% or less, preferably 8% or less, more preferably 5% or less, and still more preferably 3% or less. Incidentally, the lower limit value thereof is not particularly limited, but it is preferable to attain 0.5% or less.

The method for controlling the above conditions so that there is at least one particular direction satisfying the above conditions in the plane direction of the separator is not particularly limited, and those skilled in the art can appropriately control the above conditions by referring to the description of the present specification and technical common knowledge at the time of the application of the present application. As an example, it is possible to control the respective parameters of (1) to (3) by adjusting the constituent materials of the resin film constituting the separator (and the heat resistant insulating layer in the case of including a heat resistant insulating layer to be described later) and the method for producing the resin film (and the heat resistant insulating layer).

Here, a conventionally known method such as a wet method or a stretching method is used as a method for producing a porous resin film, which is a preferred form of the resin film.

Examples of a method for producing an olefin-based porous resin film by a wet method may include a method in which an olefin-based resin film is obtained by molding an olefin-based resin composition obtained by mixing an olefin-based resin with a filler and a plasticizer and an olefin-based porous resin film in which a micropore portion is formed is obtained by extracting the filler and the plasticizer from this olefin-based resin film. On the other hand, examples of a method for producing the olefin-based porous resin film by a stretching method may include a method in which an olefin-based porous resin film in which a micropore portion is formed is obtained by uniaxially or biaxially stretching an olefin-based resin film containing an olefin-based resin.

Among these, an olefin-based porous resin film produced by a stretching method is more preferable as the olefin-based porous resin film. The olefin-based porous resin film produced by a stretching method is likely to be thermally shrunk particularly at a high temperature because of the residual strain generated by stretching. Hence, a separator satisfying the parameters according to the present invention can be realized by subjecting such an olefin-based porous resin film to a treatment for attaining heat resistance as to be described later.

Specific examples of the method for producing an olefin-based porous resin film by a stretching method may include a method in which an olefin-based resin film is obtained by extruding an olefin-based resin, a lamellar crystal is generated and grown in this olefin-based resin film, and the olefin-based resin film is then stretched to separate the lamella crystals from each other, thereby obtaining an olefin-based porous resin film in which a micropore portion is formed; and a method in which an olefin-based resin film is obtained by extruding an olefin-based resin composition obtained by mixing an olefin-based resin with a filler and the interface between the olefin-based resin and the filler are peeled off from each other by uniaxially or biaxially stretching this olefin-based resin film, thereby obtaining an olefin-based porous resin film in which a micropore portion is formed. The former method is preferable since an olefin-based porous resin film in which a great number of micropore portions are uniformly formed is obtained.

In addition, it is effective to adopt a configuration by which heat resistance is imparted to the separator, for example, in order to control the thermal shrinkage of (3) to a small value. Specific examples thereof may include a configuration in which a heat resistant insulating layer is further layered on the resin film constituting the separator so that the separator has a layered structure of a resin film and a heat resistant insulating layer.

The heat resistant insulating layer is typically a ceramic layer containing inorganic particles and a binder. The internal stress, which is increased when the temperature rises, of the separator is relieved by having a heat resistant insulating layer composed of such a ceramic layer, and it is thus possible to obtain the effect of suppressing thermal shrinkage. In addition, it is also possible to prevent induction of short circuit between the electrodes of the battery when thermal shrinkage of the separator is suppressed, and thus a battery configuration in which performance deterioration due to temperature rise hardly occurs is obtained. Furthermore, the mechanical strength of the separator is improved and rupture of the separator hardly occurs as the separator has a heat resistant insulating layer. In addition, there is also an advantage that the separator is hardly curled in the manufacturing process of the battery because of the thermal shrinkage suppressing effect and a high mechanical strength.

The inorganic particles to be contained in the heat resistant insulating layer (ceramic layer) contribute to the mechanical strength and thermal shrinkage suppressing effect of the heat resistant insulating layer. The materials to be used as the inorganic particles are not particularly limited, but examples thereof may include oxides ($SiO_2$, $Al_2O_3$, $ZrO_2$, and $TiO_2$), hydroxides and nitrides of silicon, aluminum, zirconium and titanium, and complexes thereof. These inorganic particles may be derived from mineral resources such as boehmite, zeolite, apatite, kaolin, mullite, spinel, olivine, and mica or may be artificially produced. In addition, only one kind of these inorganic particles may be used singly or two or more kinds thereof may be used concurrently. Among these, it is preferable to use silica ($SiO_2$) or alumina ($Al_2O_3$) and it is more preferable to use alumina ($Al_2O_3$) from the viewpoint of cost. The basis weight of the inorganic particles is not particularly limited, but it is preferably from 5 to 15 $g/m^2$. It is preferable that the basis weight is in this range from the viewpoint of obtaining sufficient ion conductivity and maintaining the heat resistant strength.

The binder to be contained in the heat resistant insulating layer plays a role of bonding the inorganic particles to each other and the inorganic particles to the resin film described above. By this binder, a heat resistant insulating layer is stably formed and peeling off between the resin film and the heat resistant insulating layer is prevented.

The binder to be contained in the heat resistant insulating layer is not particularly limited, and for example, compounds such as carboxymethyl cellulose (CMC), polyacrylonitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), and methyl acrylate can be used as the binder. Among these, it is preferable to use carboxymethyl cellulose (CMC), methyl acrylate, or polyvinylidene fluoride (PVDF). Only one kind of these compounds may be used singly or two or more kinds thereof may be used concurrently.

The content of the binder in the heat resistant insulating layer is preferably from 2% to 20% by mass with respect to 100% by mass of the heat resistant insulating layer. When the content of the binder is 2% by mass or more, it is possible to enhance the peeling strength between the heat resistant insulating layer and the resin film and to improve the vibration resistance of the separator. On the other hand, the gaps between the inorganic particles are properly kept when the content of the binder is 20% by mass or less, and it is thus possible to secure sufficient lithium ion conductivity.

It has been described above that the separator satisfies the regulation of (3) the thermal shrinkage as the separator is configured to have a heat resistant insulating layer in addition to the resin film, but the separator may satisfy the regulation of (3) the thermal shrinkage as a resin exhibiting high heat resistance itself such as aramid (for example, see JP 2013-139652 A) or a resin film exhibiting enhanced heat resistance by introducing a crosslinked structure into the resin (for example, see JP 2014-240471 A) is used as a constituent material of the resin film.

Incidentally, the air permeability of the separator is not particularly limited, but it is preferably 300 sec/100 cc or less, more preferably 250 sec/100 cc or less, and still more preferably 200 sec/100 cc or less as the Gurley value. Incidentally, the lower limit value of the Gurley value is not particularly limited, but it is usually 100 sec/100 cc or more. The permeability of lithium ions is sufficiently secured and deterioration in battery performance of the nonaqueous electrolyte secondary battery can be prevented when the Gurley value (air permeability) of the separator is 300 sec/100 cc or less. In the present specification, a value to be measured by the method to be described in the section of Examples later is adopted as the value of the Gurley value.

In addition, the thickness of the entire separator is also not particularly limited, but it is preferably from 8 to 35 $\mu$m, more preferably from 8 to 32 $\mu$m, and still more preferably from 12 to 25 $\mu$m.

As described above, the separator contains an electrolyte. The electrolyte is not particularly limited as long as it can exert such functions, but a liquid electrolyte or a gel polymer electrolyte is used. By using a gel polymer electrolyte, the distance between the electrodes is stabilized, the occurrence of polarization is suppressed, and the durability (cycle characteristics) is improved.

(Electrolyte)

The liquid electrolyte has a function as a carrier of lithium ions. The liquid electrolyte constituting the electrolytic solution layer has a form in which a lithium salt, which is a supporting salt, is dissolved in an organic solvent, which is a plasticizer. Examples of the organic solvent to be used may include carbonates such as ethylene carbonate (EC), propylene carbonate (PC), dimethyl carbonate (DMC), diethyl carbonate (DEC) and ethylmethyl carbonate (EMC). In addition, as the lithium salt, compounds which can be added to the active material layer of an electrode such as $Li(CF_3SO_2)_2N$, $Li(C_2F_5SO_2)_2N$, $LiPF_6$, $LiBF_4$, $LiClO_4$, $LiAsF_6$, $LiTaF_6$, and $LiCF_3SO_3$ can be adopted in the same manner. The liquid electrolyte may further contain additives other than the components described above. Specific examples of such compounds may include vinylene carbonate, methylvinylene carbonate, dimethylvinylene carbonate, phenylvinylene carbonate, diphenylvinylene carbonate, ethylvinylene carbonate, diethylvinylene carbonate, vinylethylene carbonate, 1,2-divinylethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinylvinylene carbonate, allylethylene carbonate, vinyloxymethylethylene carbonate, allyloxymethylethylene carbonate, acryloxymethylethylene carbonate, methacryloxymethylethylene carbonate, ethynylethylene carbonate, propargylethylene carbonate, ethynyloxymethylethylene carbonate, propargyloxyethylene carbonate, methyleneethylene carbonate, and 1,1-dimethyl-2-methylene ethylene carbonate. Among these, vinylene carbonate, methylvinylene carbonate, and vinylethylene carbonate are preferable and vinylene carbonate and vinylethylene carbonate are more preferable. Only one kind of these cyclic carbonic acid esters may be used singly or two or more kinds thereof may be used concurrently.
The gel polymer electrolyte has a configuration in which the liquid electrolyte is injected into a matrix polymer (host polymer) formed of an ion conductive polymer. It is excellent to use a gel polymer electrolyte as an electrolyte from the viewpoint that the fluidity of the electrolyte disappears and it is easier to block the ion conductivity between the respective layers. Examples of the ion conductive polymer to be used as a matrix polymer (host polymer) may include polyethylene oxide (PEO), polypropylene oxide (PPO), polyethylene glycol (PEG), polyacrylonitrile (PAN), polyvinylidene fluoride-hexafluoropropylene (PVdF-HEP), poly (methyl methacrylate (PMMA) and any copolymer thereof.
The matrix polymer of the gel electrolyte can exert an excellent mechanical strength by forming a crosslinked structure. In order to form a crosslinked structure, a polymerizable polymer for forming a polymer electrolyte (for example, PEO or PPO) may be subjected to a polymerization treatment such as thermal polymerization, ultraviolet polymerization, radiation polymerization, or electron beam polymerization using an adequate polymerization initiator.

[Positive electrode current collecting plate and negative electrode current collecting plate]

The materials constituting the current collecting plates (25 and 27) are not particularly limited, and known highly conductive materials, which have been conventionally used as current collecting plates for lithium ion secondary batteries, can be used. As the constituent materials of the current collecting plates, metal materials such as aluminum, copper, titanium, nickel, stainless steel (SUS), and any alloy thereof are preferable. Aluminum and copper are more preferable and aluminum is particularly preferable from the viewpoint of light weight, corrosion resistance and high conductivity. Incidentally, the same material or different materials may be used in the positive electrode current collecting plate 27 and the negative electrode current collecting plate 25.

[Positive electrode lead and negative electrode lead]

In addition, the current collector 11 may be electrically connected to the current collecting plates (25 and 27) via a positive electrode lead and a negative electrode lead although it is not illustrated. As constituent materials of the positive electrode lead and negative electrode lead, the materials to be used in known lithium ion secondary batteries can be adopted in the same manner. Incidentally, it is preferable that the part taken out from the exterior package is covered with a heat-shrinkable tube exhibiting heat resistance and insulation property or the like so as not to come into contact with peripheral devices, wires and the like, to cause a leak of electricity, and thus to affect the products (for example, automotive parts, particularly electronic devices, and the like).

[Battery exterior packaging body]

As a battery exterior packaging body 29, a known metal can case can be used and also a bag-like case which is formed of a laminate film containing aluminum and can cover the power generating element can be used. As the laminate film, for example, a laminate film having a three-layer structure formed by laminating PP, aluminum, and nylon in this order can be used, but it is not limited thereto at all. A laminate film is desirable and an aluminate laminate is more preferable from the viewpoint of exhibiting high output and excellent cooling performance and being able to be suitably utilized in batteries for large-sized devices for EV and HEV.

[Cell size]

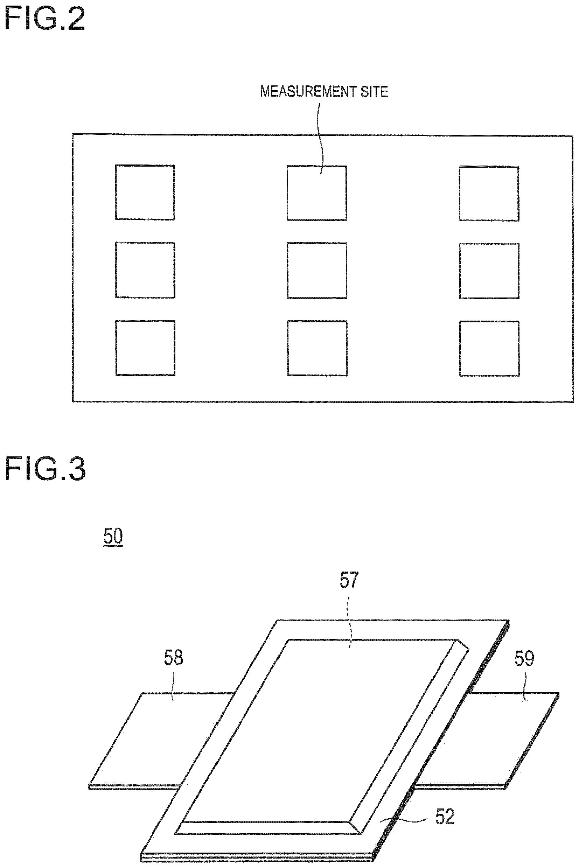

Fig. 3 is a perspective view illustrating the appearance of a flat lithium ion secondary battery, which is a representative embodiment of a secondary battery. According to a preferred embodiment of the present invention as this lithium ion secondary battery, a flat stacked type laminate battery in which the power generating element is enclosed in a battery exterior packaging body formed of a laminate film containing aluminum is provided. It is possible to increase the capacity by forming the battery into a flat stacked type laminate in this manner.

As illustrated in Fig. 3, a flat lithium ion secondary battery 50 has a rectangular flat shape, and a positive electrode tab 58 and a negative electrode tab 59 for taking out the electric power are drawn out through both side portions of the battery. A power generating element 57 is wrapped with a battery exterior material 52 of the lithium ion secondary battery 50, the periphery thereof is heat sealed, and the power generating element 57 is hermetically sealed in a state in which the positive electrode tab 58 and the negative electrode tab 59 are drawn out to the outside. Here, the power generating element 57 corresponds to the power generating element 21 of the lithium ion secondary battery 10 illustrated in Fig. 1 previously described. The power generating element 57 is formed by stacking a plurality of single cell layers (single cells) 19 composed of the positive electrode (positive electrode active material layer) 15, the electrolyte layer 17, and the negative electrode (negative electrode active material layer) 13.

Incidentally, the lithium ion secondary battery described above is not limited to a stacked type flat shape, but it is preferable that the lithium ion secondary battery has a flat shape from the viewpoint of improving the energy density and it is more preferable that the lithium ion secondary battery is a stacked type since it is possible to easily attain a high capacity. In a wound type lithium ion secondary battery, the shape of the lithium ion secondary battery is not particularly limited and it may be a cylindrical shape or a rectangular flat shape formed by deforming such a cylindrical shape. In the lithium ion secondary battery having a cylindrical shape, the exterior material thereof is not particularly limited and a laminate film or a conventional cylindrical can (metal can) may be used. Preferably, the power generating element is cased with an aluminum laminate film. By this form, weight saving can be achieved.

In addition, taking out of the tabs 58 and 59 illustrated in Fig. 3 is not particularly limited. It is not limited to the form illustrated in Fig. 3 and the positive electrode tab 58 and the negative electrode tab 59 may be drawn out through the same side or the positive electrode tab 58 and the negative electrode tab 59 may be divided into a plurality of pieces and taken out through the respective sides. In addition, in a wound type lithium ion battery, a terminal may be formed by utilizing, for example, a cylindrical can (metal can) instead of a tab.

[Ratio of battery area (projected area of battery including battery outer case) to rated capacity and rated discharge capacity]

In a general electric vehicle, the battery storage space is about 170 L. The ordinary cell storage space efficiency is about 50% since the cell and auxiliary machines such as a charge and discharge control device are stored in this space. The loading efficiency of the cell into this space is a factor that dominates the cruising distance of the electric vehicle. As the size of the unit cell is smaller, the loading efficiency is impaired and thus the cruising distance cannot be secured.

In a general electric vehicle, the market demand for the mileage on a single charge (cruising distance) is 350 km. The inventors of the present invention have carried out investigations on a nonaqueous electrolyte secondary battery having a volumetric energy density of 350 Wh/L or more since the volumetric energy density of a battery is preferably 350 Wh/L or more when such a cruising distance is taken into consideration, thereby completing the present invention.

In addition, in the present invention, it is preferable that the battery structure in which the power generating element is covered with an exterior packaging body is large. The effect of the present invention is remarkably exerted since a high energy density of the battery is attained by increasing the size of the battery as described above. Specifically, in the nonaqueous electrolyte secondary battery according to the present aspect, it is preferable that an increase in size of the battery is regulated from the relationship between the battery area and the battery capacity. Specifically, in the nonaqueous electrolyte secondary battery according to the present embodiment, it is preferable that the ratio of the battery area (the projected area of the battery including the battery exterior packaging body) to the rated capacity is 10 $cm^2$/Ah or more. It is more preferable as the ratio of the battery area (the projected area of the battery including the battery exterior packaging body) to the rated capacity is larger from the viewpoint of high capacity, but the ratio is usually 12 $cm^2$/Ah or less because of the in-vehicle volume.

Furthermore, in the nonaqueous electrolyte secondary battery according to the present embodiment, it is preferable that the rated capacity is 33 Ah or more. It is more preferable as the rated capacity is larger, and the upper limit thereof is not particularly limited, but it is usually 200 Ah or less. The rated capacity is preferably from 40 to 100 Ah.

Incidentally, as the rated capacity, the value measured by the method to be described below is adopted.

The electrolytic solution is injected into the cell at the manufacturing stage and then left to stand for about 10 hours to perform the initial charge. Thereafter, the rated capacity is measured at a temperature of 25°C in a voltage range of from 3.0 V to 4.15 V according to the following procedures 1 to 5.

Procedure 1: the cell is charged up to 4.15 V by constant current charge at 0.2 C and then pauses for 5 minutes.
Procedure 2: after the procedure 1, the cell is charged for 1.5 hours by constant voltage charge and pauses for 5 minutes.
Procedure 3: the cell is discharged down to 3.0 V by constant current discharge at 0.2 C, then discharged for 2 hours by constant voltage discharge, and then pauses for 10 seconds.
Procedure 4: the cell is charged up to 4.15 V by constant current charge at 0.2 C, then charged for 2.5 hours by constant voltage charge, and then pauses for 10 seconds.
Procedure 5: the cell is discharged down to 3.0 V by constant current discharge at 0.2 C, then discharged for 2 hours by constant voltage discharge, and then stopped for 10 seconds.

Rated capacity: the discharge capacity (CCCV discharge capacity) at the time of discharge from the constant current discharge to the constant voltage discharge in the procedure 5 is taken as the rated capacity.

In addition, in a nonaqueous electrolyte secondary battery, the procedures 1 to 5 are performed in the same manner and the discharge capacity (CCCV discharge capacity) at the time of discharge from the constant current discharge to the constant voltage discharge in the procedure 5 is taken as the rated capacity.

In addition, as the physical size of the electrode, it is preferable that the length of the short side of the laminate cell battery is 100 mm or more. Such a large-sized battery can be used in a vehicle application. Here, the length of the short side of the laminate cell battery refers to the side having the shortest length. The upper limit of the length of the short side is not particularly limited, but it is usually 400 mm or less.

Furthermore, the aspect ratio of the rectangular electrode is preferably from 1 to 3 and more preferably 1 to 2. Incidentally, the aspect ratio of the electrode is defined as the aspect ratio of the rectangular positive electrode active material layer. There is an advantage that the performance requirements for vehicles and the mounting space can be both attained by setting the aspect ratio to be in such a range.

(Ratio of capacity to pore volume of separator)

Furthermore, in the nonaqueous electrolyte secondary battery according to the present embodiment, the ratio of the rated capacity to the pore volume of the separator is preferably 1.55 Ah/cc or more and more preferably 1.9 Ah/cc or more. The value of the ratio of the rated capacity to the pore volume of the separator is an index, which indicates the diffusibility of lithium ions in the separator. Here, the density (true density) of the constituent material itself of the separator is required to be taken into consideration in the unit (g/cc) of the density (apparent density; bulk density) of the separator. For example, when the density (true density) of the material constituting the substantial part of the separator is low, the density (apparent density; bulk density) of the separator is lower as compared with a case in which the density (true density) is high even when the pores are present in the same volume to the same extent, and thus it is not sufficient as an index which indicates to what extent the separator material is filled per unit volume. For this reason, here, the ratio of the rated capacity to the pore volume of the separator is regulated to be used as an index of the diffusibility of lithium ions in the separator. In addition, lithium ions in the separator are increased as the capacity of the battery is increased (the rated capacity is increased), but the diffusibility of lithium ions decreases when the pore volume in the separator decreases. Consequently, the ratio of the rated capacity to the pore volume of the separator is an index of the diffusibility of lithium ions in the separator.

Here, according to the investigations by the inventors of the present invention, it has been revealed that the cycle durability of the battery can be remarkably improved by adopting a configuration in which the variation in porosity in the separator is diminished even under the environment in which the ratio of the rated capacity to the pore volume of the separator is 1.55 Ah/cc or more (preferably 1.9 Ah/cc or more) and thus the diffusibility of lithium ions is low.

At this time, the pore volume of the separator is measured as follows; the separator is taken out from the nonaqueous electrolyte secondary battery and cut into a 3 cm × 3 cm sample. The volume of the pores (micropores) present inside the sample is measured by measuring the pore distribution by the mercury intrusion porosimetry using a mercury intrusion porosimeter. In a case in which a capillary is stood in the liquid, the liquid wetting the wall rises in the capillary, and the liquid that does not wet the wall falls down. Needless to say, this capillary phenomenon is caused by the fact that a pressure is applied by the surface tension at the meniscus, and those, that do not get wet with ordinary substances, such as mercury do not enter the capillary without applying a pressure. The mercury porosimeter utilizes this, and mercury is intruded into the pores and the diameter of the pores is determined from the pressure required for the intrusion and the pore volume is determined from the intruded amount.

(Variation in porosity in separator)

In a preferred embodiment of the nonaqueous electrolyte secondary battery according to the present aspect, it is preferable that the variation in porosity in the separator is 2% or less in a case in which the ratio of the rated capacity to the pore volume of the separator is 1.9 Ah/cc or more and the ratio of the battery area to the rated capacity is 10 cm$^2$/Ah or more. Incidentally, it is more preferable as the variation in porosity in the separator is smaller. However, the production efficiency of the battery decreases when it is attempted to decrease the variation. Hence, the variation in porosity in the separator is preferably 1.5% or more when the productivity (yield) and the saturation of effect are taken into account. Incidentally, the value measured by the method to be described below is adopted as the variation in porosity in the separator.

First, as illustrated in Fig. 2, the porosity in the measurement region of 3 cm square at nine places selected in the plane direction of the separator is measured and the maximum value among the nine measured values is taken as the "maximum porosity" and the minimum value is taken as the "minimum porosity" . In addition, the arithmetic mean value of the nine measured values is taken as the "average porosity". Moreover, the variation in porosity is calculated from these values according to the following equation.

[Math. 1]

$$\frac{(\text{Maximum porosity} - \text{minimum porosity})}{\text{Average porosity}} \times 100 \; (\%)$$

Incidentally, when measuring the porosity in the sample of the separator, first, the volume of the pores (micropores) present inside the sample is measured by pore distribution measurement by the mercury intrusion porosimetry using a mercury intrusion porosimeter. Thereafter, the porosity in the separator sample is calculated from this measured value of pore volume and the apparent volume of the sample (porosity = (sample pore volume/sample volume) $\times$ 100 (%)).

The method for controlling the value of the variation in porosity in the separator to be in the above range is not particularly limited, and the methods conventionally proposed for the purpose of decreasing the variation in porosity in the separator can be used in the same manner.

[Assembled Battery]

An assembled battery is one constituted by connecting a plurality of batteries. More specifically, it is one constituted by connecting at least two or more batteries in series, in parallel, or in series and parallel. It is possible to freely adjust the capacity and the voltage by connecting the batteries in series and in parallel.

It is also possible to form a compact assembled battery, which can be attached and detached, by connecting a plurality of batteries in series or in parallel. Moreover, it is also possible to form an assembled battery having a high volumetric energy density and a large capacity and a high output which are suitable for a power source for driving a vehicle or an auxiliary power source to be demanded to have a high volumetric output density by further connecting a plurality of these compact assembled batteries which can be attached and detached in series or in parallel. The number of batteries to be connected to fabricate an assembled battery or the number of steps of compact assembled batteries to be stacked to fabricate a large capacity assembled battery may be determined depending on the battery capacity and output of the vehicle (electric vehicle) on which the battery is mounted.

A cell unit in which a plurality of batteries are stacked in this manner may be housed in upper and lower cases (for example, metal cases) to form an assembled battery. At this time, usually the assembled battery is stored in the case as the metal case is fastened by the fastening member. Consequently, the battery is pressurized in the stacked direction in the case.

[Vehicle]

The nonaqueous electrolyte secondary battery of the present embodiment exhibits favorable cycle characteristics as the discharge capacity thereof is maintained even when being used for a long period of time. Furthermore, the volumetric energy density thereof is high. In vehicle applications such as electric vehicles, hybrid electric vehicles, fuel cell vehicles and hybrid fuel cell vehicles, a long life span is required as well as a high capacity and a large size are demanded as compared with electric and mobile electronic devices applications. Consequently, the nonaqueous electrolyte secondary battery can be suitably utilized as a power source for a vehicle, for example, as a power source for driving a vehicle or an auxiliary power source.

Specifically, a battery or an assembled battery formed by combining a plurality of these can be mounted on a vehicle. In the present invention, it is possible to constitute a battery, which has a long life span and exhibits excellent long-term reliability and output characteristics, and it is thus possible to constitute a plug-in hybrid electric vehicle with a long EV mileage and an electric vehicle with a long single charge mileage by mounting such a battery. This is because a highly reliable vehicle with a long life span is obtained by using the battery or an assembled battery constituted by combining a plurality of these in, for example, hybrid vehicles, fuel cell vehicles, and electric vehicles (each including two-wheeled vehicles (motorcycles) and three-wheeled vehicles in addition to four-wheeled vehicles (passenger vehicles, commercial vehicles such as trucks and buses, light vehicles, and the like) in the case of motor vehicles. However, the application is not limited to motor vehicles, but, for example, the battery can be applied as various kinds of power sources of other vehicles, for example, mobile bodies such as electric trains and can be utilized as a power source for placing such as an uninterruptible power supply.

Examples

The effect of the present invention will be described with reference to the following Examples and Comparative Examples. In Examples, the notation of "parts" or "%" may be used in some cases, and this represents "parts by weight" or "% by weight" unless otherwise stated. In addition, the respective operations are performed at room temperature (25°C) unless otherwise stated.

(Method for measuring tensile yield strength and tensile elongation at break of separator)

The tensile yield strength and tensile elongation at break of the respective separators used in the following Examples and Comparative Examples were measured by the following method.
First, the separator fabricated was cut into a strip shape (100 mm × 10 mm size) along an arbitrary direction and a test piece was fabricated. Subsequently, both end portions in the length direction of the test piece were gripped by a tensile testing apparatus so that the distance between the chucks was 50 mm, then the tensile strength was measured at 23°C and a tension speed of 300 mm/min in conformity to JIS K7127, and the tensile yield strength and the tensile elongation at break were calculated based on the S-S curve. This operation was repeatedly performed, and the measured values in the direction in which the tensile elongation at break was the maximum were taken as the values of the tensile yield strength and the tensile elongation at break of the separator. Incidentally, ten test pieces were subjected to the measurement and the average value of the measured values was calculated.

(Method for measuring thermal shrinkage of separator)

The thermal shrinkage of the respective separators used in the following Examples and Comparative Examples was measured by the following method.
First, the separator fabricated was cut into a strip shape (10 cm × 2 cm) along the direction in which the tensile elongation at break was the maximum in the separator and a test piece was fabricated. Subsequently, a marked line having a length of 8 cm was drawn on a linear imaginary line connecting the central portion in one short side direction of the test piece and the central portion on the other short side of the test piece, and the test piece was left to still stand for 30 minutes in an atmosphere of the second grade standard atmosphere regulated in JIS K7100. Thereafter, the length ($L_0$) of the marked line drawn on the test piece was measured down to two decimal places by using a pair of vernier calipers conforming to JIS B7505. Subsequently, the test piece was placed in a thermostatic chamber having an internal temperature of 150°C and heated for 1 hour in a state of being vertically hung with the long side direction thereof facing up and down, then the test piece was left to still stand for 30 minutes in an atmosphere of the second grade standard atmosphere regulated in JIS K7100, then the length ($L_1$) of the marked line drawn on the test piece was measured down to two decimal places by using a pair of vernier calipers conforming to JIS B7505, and the thermal shrinkage (%) was calculated based on the following equation. Incidentally, ten test pieces were subjected to the measurement and the average value of the measured values was calculated.

$$\text{Thermal shrinkage (\%)} = [(L_0 - L_1) \times 100]/L_0$$

(Method for measuring Gurley value of separator)

The Gurley value of the respective separators used in the following Examples and Comparative Examples was measured by the following method.
That is, the Gurley value at arbitrary 10 places of the separator was measured in an atmosphere at 23°C and a relative humidity of 65% RH in conformity to JIS P8117 and the average value thereof was taken as the measured value of the Gurley value.

(Method for measuring volumetric energy density of battery)

The volumetric energy density of the batteries fabricated in the following Examples and Comparative Examples was measured by the following method.

Ten batteries fabricated were subjected to constant current-constant voltage charge at normal temperature (25°C) including constant current charge at a constant current of 0.2 C until the final voltage reached 4.2 V and the subsequent constant voltage charge at a constant voltage of 4.2 V until the final current reached a current value equivalent to 0.002 C to be put in a fully charged state. Subsequently, discharge was performed at normal temperature (25°C) and a constant current of 0.2 C until the final voltage reached 2.5 V and the discharge capacity was measured.

The volumetric energy density of the battery was calculated from this discharge capacity and the size of the battery. Incidentally, the volumetric energy density is the average value for the ten batteries measured.

(Method for measuring cycle durability (capacity retention))

Some of the batteries fabricated in the following Examples and Comparative Examples were subjected to the measurement of capacity retention by the following method and the cycle durability thereof was evaluated.

That is, the battery fabricated was charged to a cut-off voltage of 4.15 V by setting the current density with respect to the positive electrode to 2 mA/cm$^2$ to obtain the initial charge capacity, the battery paused for 1 hour, and then the capacity when the battery was discharged to the cut-off voltage of 3.0V was taken as the initial discharge capacity. This charge and discharge cycle was repeated 500 times. The proportion of the discharge capacity at the 500th cycle to the initial discharge capacity was taken as the capacity retention (%) and evaluated as cycle durability.

(Evaluation on insulation property)

The batteries fabricated in the following Examples and Comparative Examples were subjected to the measurement of the amount of voltage drop when a steel bar having a pointed tip and a diameter of 3 mm was penetrated through the battery of which the cell voltage was controlled to 4.2 V, and this amount of voltage drop was used as an index of insulation property of the separator and occurrence of internal short circuit of the battery. Specifically, the voltage in five seconds after the cell was penetrated at a constant speed (80 mm/sec) was measured and the insulation property and the occurrence of internal short circuit of the respective separators were compared by calculating the difference from the initial voltage.

(Example 1)

1. Preparation of electrolytic solution

A mixed solvent (50 : 50 (volume ratio)) of ethylene carbonate (EC) and diethyl carbonate (DEC) was used as a solvent. In addition, 1.0 M LiPF$_6$ was used as a lithium salt. Furthermore, 1.0% by mass of 1,3-propane sultone, 1.0% by mass of vinylene carbonate and 1.0% by mass of fluoroethylene carbonate were added to 100% by mass of the sum of the solvent and the lithium salt, thereby fabricating an electrolytic solution. Incidentally, "1.0 M LiPF$_6$" means that the concentration of lithium salt (LiPF$_6$) in the mixture of the mixed solvent with the lithium salt is 1.0 M.

2. Fabrication of positive electrode

A solid component composed of 63% by mass of NMC composite oxide (LiNi$_{0.5}$Mn$_{0.3}$Co$_{0.2}$O$_2$, average particle diameter: 15 $\mu$m) as a positive electrode active material, 27% by mass of spinel type lithium manganese composite oxide (LiMn$_2$O$_4$), 5% by mass of carbon powder as a conductive auxiliary and 5% by mass of PVdF as a binder was prepared. An appropriate amount of N-methyl-2-pyrrolidone (NMP) as a slurry viscosity adjusting solvent was added to this solid component to prepare a positive electrode active material slurry. Next, the positive electrode active material slurry was coated on both sides of an aluminum foil (thickness: 20 $\mu$m) as a current collector by using a die coater and drying and pressing were performed, thereby fabricating a positive electrode in which the one side coating thickness of the positive electrode active material layer was 65 $\mu$m.

3. Fabrication of negative electrode

A solid component composed of 95% by mass of natural graphite (average particle diameter: 18 $\mu$m) as a negative electrode active material and 5% by mass of PVdF was prepared. An appropriate amount of N-methyl-2-pyrrolidone (NMP) as a slurry viscosity adjusting solvent was added to this solid component to prepare a negative electrode active material slurry. Next, the negative electrode active material slurry was coated on both sides of a copper foil (10 $\mu$m) as a current collector by using a die coater and drying and pressing were performed, thereby fabricating a negative electrode having a one side coating thickness of 65 $\mu$m.

4. Completion process of unit cell

As a separator, one in which a heat resistant insulating layer having a thickness of 4 $\mu$m was disposed on one side of a three-layer laminated porous resin film (total thickness: 18 $\mu$m) of porous polypropylene film (6 $\mu$m)/porous polyethylene film (6 $\mu$m)/porous polypropylene film (6 $\mu$m) was fabricated. Incidentally, the heat resistant insulating layer was a ceramic layer composed of a solid component containing alumina particles (average particle diameter: 0.07 $\mu$m) at 95% by mass and a binder at 5% by mass. The measured values of tensile yield strength, tensile elongation at break and thermal shrinkage for this separator are presented in the following Table 1.
Subsequently, the positive electrode thus fabricated was cut into a rectangular shape of 200 mm $\times$ 200 mm, the negative electrode was cut into a rectangular shape of 210 mm $\times$ 210 mm, and the separator was cut into a rectangular shape of 220 mm $\times$ 220 mm (10 positive electrodes, 11 negative electrodes, and 20 separators). These positive electrodes and negative electrodes were alternately layered via the separator, thereby fabricating a power generating element.
A tab was welded to the power generating element obtained, and the power generating element was hermetically sealed in an exterior package formed of an aluminum laminate film having a thickness of 150 $\mu$m together with the electrolytic solution, thereby completing a lithium ion secondary battery. Thereafter, the battery was sandwiched between a urethane rubber sheet (thickness: 3 mm) larger than the electrode area and an Al plate (thickness: 5 mm) and appropriately pressurized in the stacked direction from both sides. Thereafter, the battery thus obtained was subjected to 0.2 C/4.2 V_CC/CV charge at 25°C for 7 hours. Subsequently, the battery paused for 10 minutes and then was subjected to 0.2 C_CC discharge to a voltage of 2.5 V. The measured value of the volumetric energy density for this battery is presented in the following Table 1.

(Example 2)

A lithium ion secondary battery was fabricated by the same method as in Example 1 described above except that the volumetric energy density of the battery was set to 380 Wh/L by setting the mixing proportions of the NMC composite oxide and spinel type lithium manganese composite oxide in the solid component of the positive electrode active material slurry to 71% by mass and 19% by mass, respectively.

(Example 3)

A lithium ion secondary battery was fabricated by the same method as in Example 1 described above except that the volumetric energy density of the battery was set to 450 Wh/L by using only 90% by mass of NMC composite oxide as a positive electrode active material.

(Example 4)

A lithium ion secondary battery was fabricated by the same method as in Example 1 described above except that the volumetric energy density of the battery was set to 550 Wh/L by using only 90% by mass of NMC composite oxide ($LiNi_{0.6}Mn_{0.2}Co_{0.2}O_2$, average particle diameter: 15 $\mu$m) as a positive electrode active material.

(Example 5)

A lithium ion secondary battery was fabricated by the same method as in Example 1 described above except that the volumetric energy density of the battery was set to 650 Wh/L by using only 90% by mass of NMC composite oxide ($LiNi_{0.8}Mn_{0.1}Co_{0.1}O_2$, average particle diameter: 15 $\mu$m) as a positive electrode active material and concurrently using 88% by mass of natural graphite and 7% by mass of SiO as a negative electrode active material.

(Comparative Example 1)

A lithium ion secondary battery was fabricated by the same method as in Example 1 described above except that the volumetric energy density of the battery was set to 340 Wh/L by concurrently using 27% by mass of NMC composite oxide ($LiNi_{0.8}Mn_{0.1}Co_{0.1}O_2$, average particle diameter: 15 $\mu$m) and 63% by mass of the spinel type lithium manganese composite oxide ($LiMn_2O_4$) as a positive electrode active material.

(Comparative Example 2)

A lithium ion secondary battery was fabricated by the same method as in Example 1 described above except that the volumetric energy density of the battery was set to 315 Wh/L by concurrently using 20% by mass of NMC composite oxide ($LiNi_{0.8}Mn_{0.1}Co_{0.1}O_2$, average particle diameter: 15 $\mu$m) and 70% by mass of the spinel type lithium manganese composite oxide ($LiMn_2O_4$) as a positive electrode active material.

(Comparative Example 3)

A lithium ion secondary battery was fabricated by the same method as in Example 2 described above except that a porous polypropylene film having a thickness of 18 $\mu$m was used instead of the three-layer laminated resin film constituting the separator.

(Comparative Example 4)

A lithium ion secondary battery was fabricated by the same method as in Comparative Example 3 described above except that the volumetric energy density of the battery was set to 340 Wh/L by decreasing the mixing proportion of the NMC composite oxide in the positive electrode active material.

(Comparative Example 5)

A lithium ion secondary battery was fabricated by the same method as in Example 3 described above except that a heat resistant insulating layer was not provided in the separator but only a three-layer laminated resin film (total thickness: 18 $\mu$m) was used as a separator.

The specifications and measurement results for Examples 1 to 5 and Comparative Examples 1 to 5 above are presented in the following Table 1.

(Example 6)

A lithium ion secondary battery was fabricated by the same method as in Example 3 described above except that one having a lower yield strength and a larger tensile elongation at break and a larger air permeability (a smaller Gurley value) was used as a separator.

(Example 7)

A lithium ion secondary battery was fabricated by the same method as in Example 3 described above except that one having a lower yield strength and a larger tensile elongation at break was used as a separator.

(Example 8)

A lithium ion secondary battery was fabricated by the same method as in Example 3 described above except that one having a lower yield strength and a lower air permeability (a larger Gurley value) and a larger tensile elongation at break was used as a separator.

The specifications and measurement results for Examples 6 to 8 above are presented in the following Table 2 together with those for Example 3 described above.

(Example 9)

A lithium ion secondary battery was fabricated by the same method as in Example 3 described above except that one having a lower air permeability (a larger Gurley value) was used as a separator.

(Example 10)

A lithium ion secondary battery was fabricated by the same method as in Example 9 described above except that one having a smaller thermal shrinkage and a lower air permeability (a larger Gurley value) was used as a separator.

The specifications and measurement results for Examples 9 and 10 above are presented in the following Table 3 together with those for Example 3 described above. Incidentally, only Examples presented in Table 3 were also subjected to the evaluation on the cycle durability.

(Example 11)

A lithium ion secondary battery was fabricated by the same method as in Example 6 described above except that a porous polyethylene film having a thickness of 18 $\mu$m was used instead of the three-layer laminated resin film constituting the separator.

(Example 12)

A lithium ion secondary battery was fabricated by the same method as in Example 8 described above except that a porous polypropylene film having a thickness of 18 $\mu$m was used instead of the three-layer laminated resin film constituting the separator.

The specifications and measurement results for Examples 11 and 12 above are presented in the following Table 4 together with those for Example 7 described above.

(Example 13)

A lithium ion secondary battery was fabricated by the same method as in Example 3 described above except that the thicknesses of the porous polypropylene film and porous polyethylene film constituting the three-layer laminated resin film of the separator were set to 3 $\mu$m, respectively.

(Example 14)

A lithium ion secondary battery was fabricated by the same method as in Example 3 described above except that the thicknesses of the porous polypropylene film (two layers) and porous polyethylene film constituting the three-layer laminated resin film of the separator were set to 9 $\mu$m and 10 $\mu$m, respectively.

The specifications and measurement results for Examples 13 and 14 are presented in the following Table 5 together with those for Example 3 described above.

[Table 1]

| | Energy density | Physical properties of separator | | | | Constituent material | | Gurley value | Film thickness | | | Positive electrode active material | Negative electrode active material | Amount of voltage drop after 5 seconds from start of test |
| | | Yield strength | Tensile elongation at break | Thermal shrinkage | Resin film | Heat resistant insulating layer | | Total thickness | PE | PP | | | |
| Unit | Wh/L | MPa | % | % | -- | -- | sec/100 cc | μm | μm | μm | -- | -- | mV |
| Example 1 | 350 | 14 | 450 | 5 | PP/PE/PP | Ceramic | 200 | 22 | 6 | 6 | NCM523+LMO | Natural graphite | 10 |
| Example 2 | 380 | 14 | 450 | 5 | PP/PE/PP | Ceramic | 200 | 22 | 6 | 6 | NCM523+LMO | Natural graphite | 10 |
| Example 3 | 450 | 14 | 450 | 5 | PP/PE/PP | Ceramic | 200 | 22 | 6 | 6 | NCM523 | Natural graphite | 12 |
| Example 4 | 550 | 14 | 450 | 5 | PP/PE/PP | Ceramic | 200 | 22 | 6 | 6 | NCM622 | Natural graphite | 15 |
| Example 5 | 650 | 14 | 450 | 5 | PP/PE/PP | Ceramic | 200 | 22 | 6 | 6 | NCM811 | Natural graphite + SiO | 20 |
| Comparative Example 1 | 340 | 14 | 450 | 5 | PP/PE/PP | Ceramic | 200 | 22 | 6 | 6 | NCM811+LMO | Natural graphite | 7 |
| Comparative Example 2 | 315 | 14 | 450 | 5 | PP/PE/PP | Ceramic | 200 | 22 | 6 | 6 | NCM811+LMO | Natural graphite | 5 |
| Comparative Example 3 | 380 | 35 | 80 | 5 | PP | Ceramic | 200 | 22 | - | 18 | NCM523+LMO | Natural graphite | 100 |
| Comparative Example 4 | 340 | 35 | 80 | 5 | PP | Ceramic | 200 | 22 | - | 18 | NCM523+LMO | Natural graphite | 25 |
| Comparative Example 5 | 450 | 14 | 450 | 15 | PP/PE/PP | Nil | 200 | 18 | 6 | 6 | NCM523+LMO | Natural graphite | 150 |

[Table 2]

| | Energy density | Physical properties of separator | | | Constituent material | | Gurley value | Film thickness | | | Positive electrode active material | Negative electrode active material | Amount of voltage drop after 5 seconds from start of test |
| | | Yield strength | Tensile elongation at break | Thermal shrinkage | Resin film | Heat resistant insulating layer | | Total thickness | PE | PP | | | |
| Unit | Wh/L | MPa | % | % | -- | -- | sec/ 100 cc | $\mu$m | $\mu$m | $\mu$m | -- | -- | mV |
| Example 6 | 450 | 5 | 920 | 5 | PP/PE/PP | Ceramic | 180 | 22 | 6 | 6 | NCM523 | Natural graphite | 5 |
| Example 7 | 450 | 7 | 770 | 5 | PP/PE/PP | Ceramic | 200 | 22 | 6 | 6 | NCM523 | Natural graphite | 7 |
| Example 8 | 450 | 9 | 580 | 5 | PP/PE/PP | Ceramic | 220 | 22 | 6 | 6 | NCM523 | Natural graphite | 10 |
| Example 3 | 450 | 14 | 450 | 5 | PP/PE/PP | Ceramic | 200 | 22 | 6 | 6 | NCM523 | Natural graphite | 12 |

[Table 3]

| | Energy density | Physical properties of separator | | | Constituent material | | Gurley value | Film thickness | | | Positive electrode active material | Negative electrode active material | Amount of voltage drop after 5 seconds from start of test | Capacity retention after 500 cycles |
| | | Yield strength | Tensile elongation at break | Thermal shrinkage | Resin film | Heat resistant insulating layer | | Total thickness | PE | PP | | | | |
| Unit | Wh/L | MPa | % | % | -- | -- | sec/100 cc | μm | μm | μm | -- | -- | mV | % |
| Example 3 | 450 | 14 | 450 | 5 | PP/PE/PP | Ceramic | 200 | 22 | 6 | 6 | NCM523 | Natural graphite | 12 | 96 |
| Example 9 | 450 | 14 | 450 | 5 | PP/PE/PP | Ceramic | 250 | 22 | 6 | 6 | NCM523 | Natural graphite | 12 | 95 |
| Example 10 | 450 | 14 | 450 | 3 | PP/PE/PP | Ceramic | 400 | 22 | 6 | 6 | NCM523 | Natural graphite | 15 | 83 |

[Table 4]

| | Energy density | Physical properties of separator | | | Constituent material | | Gurley value | Film thickness | | | Positive electrode active material | Negative electrode active material | Amount of voltage drop after 5 seconds from start of test |
| | | Yield strength | Tensile elongation at break | Thermal shrinkage | Resin film | Heat resistant insulating layer | | Total thickness | PE | PP | | | |
|---|---|---|---|---|---|---|---|---|---|---|---|---|---|
| Unit | Wh/L | MPa | % | % | -- | -- | sec/ 100 cc | $\mu$m | $\mu$m | $\mu$m | -- | -- | mv |
| Example 11 | 450 | 5 | 920 | 5 | PE | ceramic | 180 | 22 | 18 | - | NCM523 | Natural graphite | 5 |
| Example 7 | 450 | 7 | 770 | 5 | PP/PE/PP | Ceramic | 200 | 22 | 6 | 6 | NCM523 | Natural graphite | 7 |
| Example 12 | 450 | 9 | 580 | 5 | PP | Ceramic | 220 | 22 | - | 18 | NCM523 | Natural graphite | 10 |

[Table 5]

| | Physical properties of separator | | | | Constituent material | | Gurley value | Film thickness | | | Positive electrode active material | Negative electrode active material | Amount of voltage drop after 5 seconds from start of test |
| | Energy density | Yield strength | Tensile elongation at break | Thermal shrinkage | Resin film | Heat resistant insulating layer | | Total thickness | PE | PP | | | |
| Unit | Wh/L | MPa | % | % | -- | -- | sec/100 cc | μm | μm | μm | -- | -- | mV |
| Example 3 | 450 | 14 | 450 | 5 | PP/PE/PP | Ceramic | 200 | 22 | 6 | 6 | NCM523 | Natural graphite | 12 |
| Example 13 | 450 | 14 | 450 | 5 | PP/PE/PP | Ceramic | 200 | 13 | 3 | 3 | NCM523 | Natural graphite | 25 |
| Example 14 | 430 | 14 | 450 | 5 | PP/PE/PP | Ceramic | 200 | 32 | 10 | 9 | NCM523 | Natural graphite | 12 |

Among the results presented in Table 1, in Comparative Example 3, it can be seen that a result that the amount of voltage drop is significantly large is obtained in the case of a high energy density cell having a high volumetric energy density of 380 Wh/L since the yield strength of the separator is high and the tensile elongation at break is small and the internal short circuit of the battery cannot be sufficiently suppressed. In addition, in Comparative Example 5, it can be seen that the amount of voltage drop is significantly large in the case of a high energy density cell having a high volumetric energy density of 450 Wh/L as well since the thermal shrinkage of the separator is large and the internal short circuit of the battery cannot be sufficiently suppressed as yet.

In contrast, according to Examples 1 to 5, it can be seen that it is possible to control the amount of voltage drop to a small value in the case of a high energy density cell having a high volumetric energy density of 350 Wh/L or more since the yield strength of the separator is low and the tensile elongation at break is large and the thermal shrinkage is small and a separator exhibiting an excellent effect of suppressing the internal short circuit of the battery is provided.

Incidentally, in Comparative Examples 1 and 2 and Comparative Example 4, it can be seen that the amount of voltage drop is not a large value and the problem of internal short circuit is not so obvious even in a case in which the predetermined separator of the present application is not used since the volumetric energy density is less than 350 Wh/L to be relatively low.

Reference Signs List

| | |
|---|---|
| 10, 50 | Lithium ion secondary battery |
| 11 | Negative electrode current collector |
| 12 | Positive electrode current collector |
| 13 | Negative electrode active material layer |
| 15 | Positive electrode active material layer |
| 17 | Separator |
| 19 | Single cell layer |
| 21, 57 | Power generating element |
| 25 | Negative electrode current collecting plate |
| 27 | Positive electrode current collecting plate |
| 29, 52 | Battery exterior material |
| 58 | Positive electrode tab |
| 59 | Negative electrode tab |

**Claims**

1. A nonaqueous electrolyte secondary battery comprising a power generating element including:

   a positive electrode fabricated by forming a positive electrode active material layer containing a positive electrode active material on a surface of a positive electrode current collector,
   a negative electrode fabricated by forming a negative electrode active material layer containing a negative electrode active material on a surface of a negative electrode current collector, and
   a separator including a resin film, wherein
   a volumetric energy density of the nonaqueous electrolyte secondary battery is 350 Wh/L or more, and
   there is at least one direction having a tensile yield strength of 14 MPa or less at normal temperature, a tensile elongation at break of 100% or more at normal temperature, and a thermal shrinkage of 10% or less at the time of heating at 150°C for 1 hour in a plane direction of the separator.

2. The nonaqueous electrolyte secondary battery according to claim 1, wherein the separator has a layered structure of the resin film and a heat resistant insulating layer.

3. The nonaqueous electrolyte secondary battery according to claim 1 or 2, wherein a constituent of the resin film is polypropylene and/or polyethylene.

4. The nonaqueous electrolyte secondary battery according to any one of claims 1 to 3, wherein air permeability of the separator is 300 sec/100 cc or less as a Gurley value.

5. The nonaqueous electrolyte secondary battery according to any one of claims 1 to 4, wherein a thickness of the separator is from 8 to 35 $\mu$m.

6. The nonaqueous electrolyte secondary battery according to any one of claims 1 to 5, wherein the resin film has a three-layer structure and a thickness of a central layer of the three-layer structure is from 3 to 9 $\mu$m.

7. The nonaqueous electrolyte secondary battery according to any one of claims 1 to 6, wherein a ratio of a rated capacity to a pore volume of the separator is 1.9 Ah/cc or more, a ratio of a battery area to a rated capacity is 10 $cm^2$/Ah or more, and a variation in porosity in the separator is 2% or less.

8. The nonaqueous electrolyte secondary battery according to any one of claims 1 to 7, wherein the positive electrode active material is a lithium composite oxide having a composition to be represented by a general formula: $Li_aNi_bM_cCo_dO_2$ (where a, b, c and d satisfy $0.9 \leq a \leq 1.2$, $0 < b < 1$, $0 < c \leq 0.5$, $0 < d \leq 0.5$, and b + c + d = 1, and M is at least one kind selected from the group consisting of Mn, Ti, Zr, Nb, W, P, Al, Mg, V, Ca, Sr and Cr).

9. The nonaqueous electrolyte secondary battery according to any one of claims 1 to 8, wherein the nonaqueous electrolyte secondary battery is a flat stacked type laminate battery comprising the power generating element enclosed in a battery exterior packaging body including a laminate film containing aluminum.

FIG.1

# FIG.2

MEASUREMENT SITE

# FIG.3

50

## INTERNATIONAL SEARCH REPORT

| International application No. |
| --- |
| PCT/JP2016/067139 |

### A. CLASSIFICATION OF SUBJECT MATTER

*H01M2/14(2006.01)i, H01M10/058(2010.01)i*

According to International Patent Classification (IPC) or to both national classification and IPC

### B. FIELDS SEARCHED

Minimum documentation searched (classification system followed by classification symbols)
H01M2/14, H01M10/058

Documentation searched other than minimum documentation to the extent that such documents are included in the fields searched
Jitsuyo Shinan Koho      1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2010-202828 A  (Asahi Kasei E-materials Corp.),<br>16 September 2010 (16.09.2010),<br>claim 2; paragraphs [0030], [0050]<br>(Family: none) | 1-6,9<br>7,8 |
| Y | JP 2015-008124 A  (Leclanche S.A.),<br>15 January 2015 (15.01.2015),<br>paragraphs [0004], [0009]<br>& US 2014/0363738 A1<br>paragraphs [0006], [0011]<br>& GB 2514821 A          & EP 2814082 A1<br>& KR 10-2014-0143318 A | 7,8 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    07 October 2016 (07.10.16) | Date of mailing of the international search report<br>    18 October 2016 (18.10.16) |
| --- | --- |
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/067139 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2016/031493 A1  (Sumitomo Chemical Co., Ltd.), 03 March 2016 (03.03.2016), paragraphs [0009], [0011], [0121] & CN 105580160 A | 7,8 |

Form PCT/ISA/210 (continuation of second sheet) (January 2015)

**REFERENCES CITED IN THE DESCRIPTION**

**Patent documents cited in the description**

- JP 8138644 A
- JP 2015022893 A
- JP 2011105588 A
- JP 2013139652 A
- JP 2014240471 A